# DEMANDE DE BREVET EUROPEEN

(11) **EP 0 532 409 A1**
(43) Date de publication de la demande: **17.03.1993**
(21) Numéro de dépôt: 92402456.5
(22) Date de dépôt: 09.09.1992
(51) Int. Cl.: H04B 1/66

(54) **Système de transmission d'information à spectre étalé bidirectionnel**

(30) Priorité: 11.09.1991 FR 9111194
(71) Demandeur: SOCIETE NATIONALE D'ETUDE ET DE CONSTRUCTION DE MOTEURS D'AVIATION, "S.N.E.C.M.A.", F-75015 Paris (FR)
(72) Inventeur: Sebilet, Bruno Roger, F-92500 Rueil-Malmaison (FR)

(57) **Abrégé**

Système de transmission d'information bidirectionnel, dans le cadre d'une liaison dite à étalement de spectre par séquence directe, comportant d'une part un ensemble d'émission-réception (1) constitué d'une partie émission (10) qui engendre une information codée (14) par modulation d'une porteuse radioélectrique (15) par un code d'étalement dont le retard est modulé sous la commande d'une information (11), et une partie réception (20) qui reçoit une autre information codée (34) et en restitue l'information initiale (31) et d'autre part, un second ensemble d'émission-réception (2) constitué d'une partie émission (30) qui engendre l'information codée (34) par modulation d'une porteuse émettrice (35) par un code d'étalement dont le retard est commandé par l'information (11) reconstituée, laquelle porteuse est modulée par l'information codée (34), et une partie réception (40) qui reçoit l'information codée (14) et restitue l'information (11) par démodulation du retard du code d'étalement contenu dans cette information codée (14).

## Description

La présente invention concerne un système de transmission d'information à spectre étalé bidirectionnel destiné à la transmission d'information bidirectionnelle sans fil entre deux points quelconques.

Il est connu que lorsqu'il est recherché une transmission d'information discrète, confidentielle et résistante aux brouillages de recourir aux techniques dites d'étalement du spectre à large bande. Dans la technique d'étalement par séquence directe, à l'émission, le signal utile module'une séquence pseudo-aléatoire de valeurs binaires, le code d'étalement, dont le débit est beaucoup plus élevé que la largeur de bande du signal utile. A la réception, le signal codé reçu est corrélé avec un code pseudo-aléatoire, généré par le récepteur, dont le calage, par un dispositif de synchronisation, permet de restituer le signal utile initial.

Toutefois, cette transmission confidentielle d'information est unidirectionnelle et, donc, si l'on désire une transmission aller-retour, il est nécessaire de recourir à deux liaisons identiques et indépendantes.

Un but de l'invention est de réaliser une transmission bidirectionnelle par une liaison unique qui soit particulièrement simple dans sa réalisation et qui conserve les nombreux avantages de la technique d'étalement de spectre par séquence directe malgré les simplifications apportées à cette réalisation.

Ce but est atteint, conformément à l'invention, par un système de transmission d'information bidirectionnel, dont une première et une seconde information, dans le cadre d'une liaison dite à étalement de spectre par séquence directe, comportant au moins un premier et un second ensemble d'émission-réception, caractérisé en ce que, le premier ensemble d'émission-réception comporte une première partie émission qui engendre une première information codée à transmettre par modulation d'une porteuse radioélectrique par un code d'étalement élaboré par un premier générateur de code et dont le retard est modulé sous la commande de la première information, et une première partie réception qui reçoit une seconde information codée et restitue la seconde information par mélange de cette seconde information codée reçue avec la première information codée puis démodulation du signal ainsi mélangé et en ce que, le second ensemble d'émission-réception comporte une seconde partie émission qui engendre la seconde information codée à transmettre par modulation d'une porteuse émettrice par un code d'étalement élaboré par un second générateur de code et dont le retard est commandé par la première information reconstituée, laquelle porteuse est modulée par la seconde information codée, et une seconde partie réception qui reçoit la première information codée et restitue la première information par démodulation du retard du code d'étalement contenu dans cette première information codée, laquelle démodulation est obtenue par corrélation de cette première information codée reçue avec la seconde information codée puis détection synchrone par un signal d'alternance délivré par le second générateur de code.

La modulation de retard du code d'étalement du premier ensemble d'émission-réception peut consister dans la modification de la fréquence d'un oscillateur commandé en tension sous la commande de la première information, ou bien encore dans la modification du retard du code délivré par le premier générateur de code sous la commande de la première information.

Le code d'étalement de période T du premier ensemble d'émission-réception est composé de deux demi-séquences binaires pseudo-aléatoires, de période T/2, à intercorrélation nulle ou quasi-nulle, utilisées en alternance, et le code d'étalement du second ensemble d'émission-réception est composé des mêmes demi-séquences , l'une d'elles étant affectée d'un décalage correspondant à une rotation circulaire.

Dans un premier mode de réalisation, la porteuse radioélectrique du premier ensemble d'émission-réception est élaborée par un oscillateur local à fréquence fixe, et la porteuse émettrice du second ensemble d'émission-réception est élaborée par un oscillateur dont la fréquence est modifiable sous la commande de la seconde information.

Dans un second mode de réalisation, la porteuse radioélectrique du premier ensemble d'émission-réception est élaborée par un premier synthétiseur de fréquence depuis un oscillateur commandé en tension commandé par la première information, et la porteuse émettrice du second ensemble d'émission-réception est élaborée par un oscillateur dont la fréquence est modifiable sous la commande de la seconde information .

Avantageusement, les premier et second modulateur sont du type à deux états de phase, par exemple O-π.

D'autres caractéristiques et avantages ressortiront mieux à la description suivante, donnée à titre indicatif et non limitatif, faite en référence aux dessins annexés dans lesquels :
- la figure 1 représente un premier ensemble d'émission-réception d'un premier mode de réalisation selon l'invention,
- la figure 2 représente un second ensemble d'émission-réception d'un premier mode de réalisation selon l'invention,
- la figure 3 représente un premier ensemble d'émission-réception d'un second mode de réalisation selon l'invention, et
- la figure 4 représente un second ensemble d'émission-réception d'un second mode de réalisation selon l'invention.

Le système de transmission qui apparaît au travers des différentes figures comporte au moins un premier ensemble d'émission-réception situé en un point quelconque et au moins un second ensemble d'émission-réception situé en un autre point, distinct du premier. Ces deux ensembles assurent une liaison sans fil entre ces deux points que l'on nommera par exemple A et B. Dans chaque ensemble coexistent un émetteur et un récepteur fonctionnant simultanément.

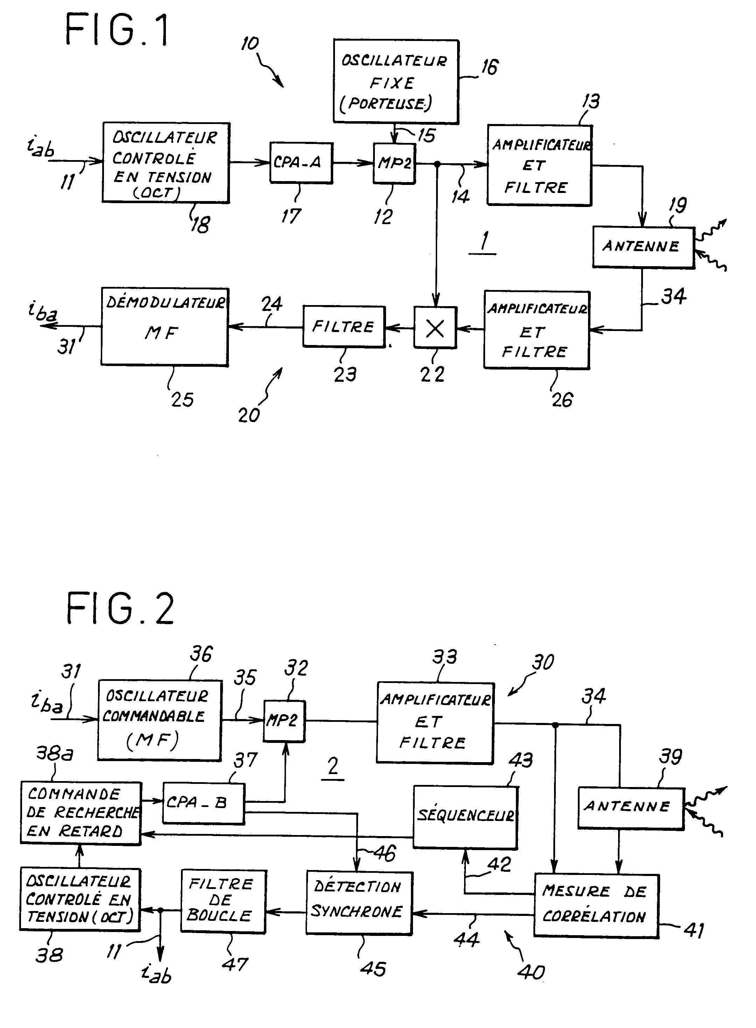

La figure 1 montre plus précisément un schéma synoptique du premier ensemble d'émission-réception 1 situé par exemple au point A, comportant une première partie émission 10 qui reçoit une première information 11 à transmettre vers le point B et une première partie réception 20 qui restitue une seconde information 31 depuis une seconde information codée 34 d'un second ensemble d'émission réception 2 situé au point B.

La première partie émission 10 comporte un premier modulateur 12, avantageusement du type à deux états de phase (MP2) mais toute autre modulation de phase ou de fréquence pourrait valablement être utilisée, qui avant amplification et filtrage 13 engendre une première information codée 14 par modulation d'une porteuse radioélectrique 15, issue d'un oscillateur local 16 à fréquence fixe, par un code d'étalement élaboré par un premier générateur de code 17 commandé par un oscillateur commandé en tension 18 lui même commandé par la première information 11. La première information codée 14, amplifiée et filtrée, est transmise au point B par l'intermédiaire d'une antenne 19.

La première partie réception 20 comporte un mélangeur 22 qui reçoit d'une part la première information codée 14 et d'autre part une seconde information codée 34 et délivre après filtrage 23 une porteuse modulée 24 par la seconde information 31 qu'un simple démodulateur de fréquence 25 pourra alors restituer. Un ensemble d'amplification et de filtrage 26 peut avantageusement être placé en sortie de l'antenne 19 pour faciliter le traitement du signal reçu par ce premier ensemble d'émission-réception 1.

La figure 2 montre plus précisément un schéma synoptique du second ensemble d'émission-réception 2, situé au point B, comportant une seconde partie émission 30 qui reçoit la seconde information 31 à transmettre vers le point A et une seconde partie réception 40 qui restitue la première information 11 depuis la première information codée 14 reçue du premier ensemble d'émission-réception 1 situé au point A.

La seconde partie émission 30 comporte un second modulateur 32 avantageusement du type à deux états de phase (MP2), sans être limité à ce type particulier de modulation, qui engendre, avantageusement après amplification et filtrage 33, une seconde information codée 34 par modulation d'une porteuse 35, élaborée par un oscillateur 36 dont la fréquence modifiable sous la commande de la seconde information 31 à transmettre, par un code d'étalement élaboré par un second générateur de code 37 commandé par un oscillateur commandé en tension 38 au travers d'un module de commande de retard 38a. La seconde information codée 34 est alors transmise par l'antenne 39.

La seconde partie réception 40 comporte un corrélateur 41 qui compare la première information codée 14 transmise par le premier ensemble d'émission-réception 1 et reçue avec la seconde information codée 34 et délivre un premier signal 42 pour un séquenceur 43 et un second signal 44 pour un circuit de détection synchrone 45 qui reçoit par ailleurs un signal d'alternance 46 délivré par le second générateur de code 37. Un filtre 47 placé en sortie du détecteur synchrone 45, un circuit multiplieur, délivrera alors la première information 11 reconstituée.

Dans le sens A vers B, la transmission s'effectue de la première partie émission 10 vers la seconde partie réception 40.

La première partie émission 10 est un émetteur fonctionnant selon la technique dite à étalement de spectre par séquence directe dans lequel l'information utile à transmettre 11 module le retard d'une séquence binaire pseudo-aléatoire par l'intermédiaire d'un oscillateur commandé en tension (OCT) 18. Cette modulation étant obtenue par variation de la fréquence de cet oscillateur 18. Il est à noter que cette modulation de retard du code pourrait aussi être obtenue en modifiant le retard du mode délivré par le premier générateur de code 17. A la réception, la seconde partie réception 40 est un récepteur monocorrélateur tel que décrit dans le brevet français N° 2 612 716 nécessitant donc, pour sa mise en oeuvre, une séquence binaire pseudo-aléatoire de même période T mais distincte de celle de l'émetteur 10.

Ces deux séquences se composent de deux demi-séquences d'égales durées T/2 dont les deux premières sont identiques et les deux secondes affectées d'un décalage correspondant à une rotation circulaire, d'une durée égale par exemple à 1 bit (en principe entre 0 et 2 bits). Bien évidement, ces demi-séquences doivent posséder une fonction d'intercorrélation nulle ou quasi-nulle. Le signal d'alternance 46 de période T égale à celle des séquences pseudo-aléatoires permet la détection synchrone de la fonction de corrélation entre le signal reçu (la première information codée 14) et un signal interne (la seconde information codée 34), c'est-à-dire en fait entre le code pseudo-aléatoire de l'émetteur et celui du récepteur dont le retard pourra alors être synchronisé et l'horloge de code (l'oscillateur commandé en tension 38) asservie. Le séquenceur 43 joue une rôle uniquement lors de l'initialisation de la liaison, se limitant à provoquer une rampe de retard continue sur le code d'étalement, au niveau du module de commande 38a, lorsque celui-ci n'est pas synchronisé.

Dans le sens B vers A, la transmission de l'information s'effectue de la seconde partie émission 30 vers la première partie réception 20.

La seconde partie émission 30 est un émetteur fonctionnant également selon la technique de l'étalement de spectre par séquence directe mais dans lequel l'information utile à transmettre 31 module en fréquence la porteuse émettrice 35. A la réception, la première partie réception 20 est constituée d'un simple mélangeur 22 suivi par un démodulateur de fréquence 25 qui restituera alors l'information utile. Lorsque la période de l'horloge du code d'étalement est petite devant la durée de la propagation aller-retour entre A et B, c'est à dire pour les courtes distances, cette liaison retour est considérablement simplifiée puisqu'elle ne nécessite plus ni d'oscillateur ni de générateur de code spécifique. L'utilisation du premier générateur de code 17 de l'émetteur suffit à assurer la démodulation du signal sans nécessiter de synchronisation du code d'étalement par une boucle à verrouillage de retard par exemple.

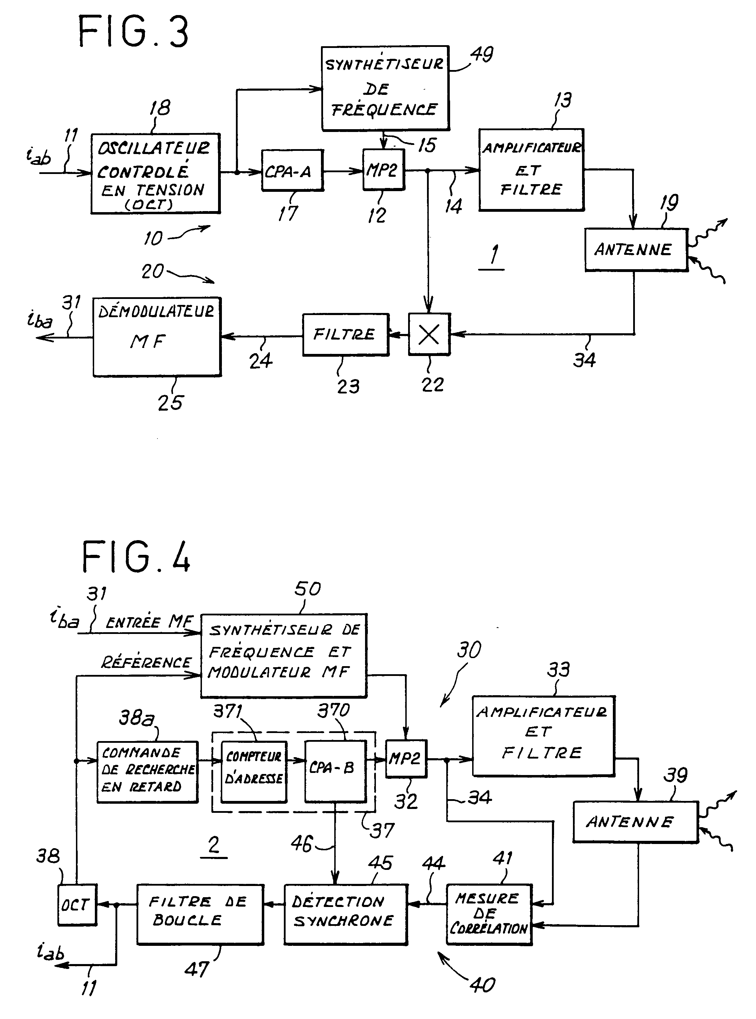

Les figures 3 et 4 illustrent un second mode de réalisation du système de transmission selon l'invention dans lequel la porteuse radioélectrique et l'horloge d'étalement sont élaborées depuis un unique oscillateur.

Les éléments constituant ce second mode de réalisation sont identiques à ceux constituant le premier à l'exception de l'ensemble de génération de la porteuse 15. Dans ce second mode, la porteuse est élaborée non plus par l'oscillateur local 16 mais depuis l'oscillateur commandé en tension (OCT) 18 dont le signal de sortie constitue la référence de fréquence par un synthétiseur de fréquence 49. De même, à la réception un second synthétiseur defréquence 50 remplace l'oscillateur 36 afin de recréer une porteuse modulée en fréquence pour pouvoir ensuite restituer l'information utile.

Les autres éléments restant inchangés seront référencés comme dans le mode de réalisation des figures 1 et 2.

Dans le sens A vers B, la transmission de l'information s'effectue comme précédemment de la première partie émission 10 vers la seconde partie réception 40.

A l'émission, la première information codée 14 transmise vers le point B est constituée d'une porteuse modulée en fréquence par la première information 11 (au travers du synthétiseur 49) et étalée (avec le modulateur 12) par le code d'étalement de cet émetteur 10. Le code, élaboré par le premier générateur de code 17 du premier ensemble d'émission-réception 1, est lui même modulé en retard par cette même information à transmettre 11.

A la réception, cette première information codée ainsi transmise 14 est corrélée avec l'information codée disponible en sortie de l'émetteur 30 du second ensemble d'émission-réception 2, pour donner une porteuse modulée en fréquence par la seconde information à transmettre 31 dont l'amplitude est significative de la corrélation entre les codes d'étalement respectifs des premier et second ensemble d'émission-réception 1 et 2. La mesure du retard existant entre ces deux codes effectuée en sortie du détecteur synchrone 45 commandé par le signal d'alternance 46 permettra alors la restitution de la première information 11.

La seconde information 31 également disponible au niveau de la phase ou de la fréquence du signal reçu 34 n'est pas exploitée.

Dans le sens B vers A, la transmission de l'information s'effectue comme précédement de la seconde partie émission 30 vers la première partie réception 20. A l'émission, la seconde information codée 34 transmise vers le point A est constituée par une porteuse modulée en fréquence par la première information 11, le signal de sortie de l'oscillateur commandé en tension 38 constituant la référence de fréquence du second synthétiseur 50, et par la seconde information 31 qui constitue l'entrée de modulation de ce même synthétiseur et étalée (par le modulateur 32) par le code d'étalement de cet émetteur 30. Ce code, élaboré par le second générateur de code 37 du second ensemble d'émission-réception 2, est lui même modulé en retard par la première information 11 reconstituée par l'émetteur 40, comme expliqué précédement.

A la réception, cette seconde information codée 34 ainsi transmise est mélangée avec l'information codée 14 disponible en sortie de l'émetteur 10 du premier ensemble d'émission-réception 1, pour donner une porteuse modulée en fréquence par la seconde information à transmettre 31 et dont, comme précédement, l'amplitude est significative de la corrélation entre les codes d'étalement des deux ensembles d'émission-réception 1 et 2. Toutefois, au contraire du récepteur 40, ce n'est pas l'amplitude de cette porteuse qui est exploitée mais sa fréquence, significative de la seconde information 31, et pour laquelle un simple démodulateur de fréquence 25 suffira ensuite pour la restitution de cette information.

Il est à noter que du fait que l'émission et la réception se font simultanément, il apparait au niveau du corrélateur 41 et du mélangeur 22 une émission parasite en sus du signal reçu. Toutefois, ce parasite dû à l'émission conjointe peut être ramené à une tension continue et est alors aisément éliminable.

Comme pour le mode de réalisation des figures 1 et 2, un séquenceur (non représenté) pourrait être adjoint pour aider le synchronisme à l'initialisation.

La figure 4 montre un exemple de réalisation du second générateur de code 37 (applicable également au premier générateur de code 17). Celui-ci comporte une mémoire 370 qui contient le code d'étalement et un compteur d'adresse 371 qui permet l'adressage de cette mémoire depuis l'horloge de code, laquelle est constituée par l'oscillateur commandé en tension 38.

La système de transmission selon l'invention est particulièrement intéressant, car il allie les avantages de la technique de l'étalement de spectre par séquence directe que sont la discrétion, la protection aux interférences ou la résistance à une propagation avec trajets multiples par exemple, à ceux d'une liaison hertzienne bidirectionnelle classique, ce qui lui ouvre d'infinies possibilités en matière de transmission point à point. Il peut s'agir d'une liaison entre un ordinateur et un périphérique (l'un ou les deux étant mobiles), d'une liaison hertzienne du type RS 232 ou bien encore d'un modulateur-démodulateur (MODEM) hertzien sans fil à l'intérieur d'un bâtiment par exemple.

## Revendications

1. Système de transmission d'information bidirectionnel, dont une première et une seconde information, dans le cadre d'une liaison dite à étalement de spectre par séquence directe, comportant au moins un premier et un second ensemble d'émission-réception, caractérisé en ce que,
le premier ensemble d'émission-réception (1) comporte une première partie émission (10) qui engendre une première information codée (14) à transmettre par modulation d'une porteuse radioélectrique (15) par un code d'étalement élaboré par un premier générateur de code (17) et dont le retard est modulé sous la commande de la première information (11), et une première partie réception (20) qui reçoit une seconde information codée et restitue la seconde information (31) par mélange (22) de cette seconde information codée reçue (34) avec la première information codée (14) puis démodulation (26) du signal ainsi mélangé et en ce que,
le second ensemble d'émission-réception (2) comporte une seconde partie émission (30) qui engendre la seconde information codée (34) à transmettre par modulation d'une porteuse émettrice (35) par un code d'étalement élaboré par un second générateur de code (37) et dont le retard est commandé par la première information (11) reconstituée, laquelle porteuse est modulée par la seconde information codée (14), et une seconde partie réception (40) qui reçoit la première information codée (14) et restitue la première information (11) par démodulation du retard du code d'étalement contenu dans cette première information codée (14), laquelle démodulation est obtenue par corrélation de cette première information codée reçue (14) avec la seconde information codée (34) puis détection synchrone (45) par un signal d'alternance (46) délivré par le second générateur de code (37).

2. Système de transmission selon la revendication 1, caractérisé en ce que la modulation du retard du code d'étalement du premier ensemble d'émission-réception (1) consiste en la modification de la fréquence d'un oscillateur commandé en tension (18) sous la commande de la première information (11).

3. Système de transmission selon la revendication 1, caractérisé en ce que la modulation du retard du code d'étalement du premier ensemble d'émission-réception (1) consiste en la modification du retard du code délivré par le premier générateur de code (17) sous la commande de la première information (11).

4. Système de transmission selon l'une quelconque des revendications 1 à 3, caractérisé en ce que le code d'étalement de période T du premier ensemble d'émission-réception (1) est composé de deux demi-séquences binaires pseudo-aléatoires, de période T/2, à intercorrélation nulle ou quasi-nulle, utilisées en alternance, et en ce que, le code d'étalement du second ensemble d'émission-réception (2) est composé des mêmes demi-séquences, l'une d'elles étant affectée d'un décalage correspondant à une rotation circulaire.

5. Système de transmission selon l'une quelconque des revendications 1 à 4, caractérisé en ce que la porteuse radioélectrique (15) du premier ensemble d'émission-réception (1) est élaborée par un oscillateur local (16) à fréquence fixe.

6. Système de transmission selon l'une quelconque des revendications 1 à 4, caractérisé en ce que la porteuse radioélectrique (15) du premier ensemble d'émission-réception (1) est élaborée par un premier synthétiseur de fréquence (49) depuis un oscillateur commandé en tension (18) commandé par la première information (11).

7. Système de transmission selon la revendication 5, caractérisé en ce que la porteuse émettrice (35) du second ensemble d'émission-réception (2) est élaborée par un oscillateur (35) dont la fréquence est modifiable sous la commande de la seconde information (31).

8. Système de transmission selon la revendication 6, caractérisé en ce que la porteuse émettrice (35) du second ensemble d'émission-réception (2) est élaborée par un second synthétiseur de fréquence (50) depuis un oscillateur commandé en tension (38) commandé par la première information reconstituée (11), la seconde information (31) constituant une entrée de modulation pour ce synthétiseur.

9. Système de transmission selon l'une quelconque des revendications 1 à 8, caractérisé en ce que les premier et second modulateur (12,32) sont du type à deux états de phase, par exemple O-π.
